# EUROPÄISCHE PATENTSCHRIFT

(11) **EP 1 242 260 B1**
(45) Veröffentlichungstag und Bekanntmachung des Hinweises auf die Patenterteilung: **12.05.2004**
(21) Anmeldenummer: 01960296.0
(22) Anmeldetag: 12.06.2001
(51) Int. Cl.: B60J 7/20

(54) **MEHRTEILIGE ABDECKUNG FÜR DEN AUFNAHMERAUM EINES VERDECKES**
MULTIPART COVERING FOR THE ACCOMMODATING SPACE OF A ROOF
SYSTEME DE RECOUVREMENT EN PLUSIEURS PARTIES POUR L'ESPACE DE RECEPTION D'UNE CAPOTE

(30) Priorität: 26.07.2000 DE 10036223
(43) Veröffentlichungstag der Anmeldung: 25.09.2002
(73) Patentinhaber: CTS Fahrzeug-Dachsysteme GmbH, 21079 Hamburg (DE)
(72) Erfinder: WAGNER, Tobias, 21149 Hamburg (DE); SCHUMACHER, Thorsten, 25495 Kummerfeld (DE); BRETTMANN, Jörg, 27367 Sottrum (DE)
(74) Vertreter: Wittner, Walter
(86) Internationale Anmeldenummer: PCT/EP2001/006608
(87) Internationale Veröffentlichungsnummer: WO 2002/008005

(56) Entgegenhaltungen:
- DE-U- 29 812 165
- US-A- 5 921 608

## Beschreibung

Die Erfindung betrifft eine mehrteilige Abdeckung für den Aufnahmeraum eines Verdeckes im Heck eines Fahrzeuges gemäß dem Oberbegriff des Anspruches 1.

Es ist bekannt, Klappverdecke von Fahrzeugen in geöffnetem Zustand in einem heckseitigen Aufnahmeraum des Fahrzeuges abzulegen und über eine mehrteilige Abdeckung der vorgenannten Art mit in Fahrzeugquerrichtung verlaufendem Mittelteil und daran anschließenden Seitenteilen abzudecken (DE 39 39 145 A1). Die Seitenteile sind einem Bereich zugeordnet, der seitlich und in Fahrtrichtung über das Mittelteil auskragt und in dem bei geschlossenem Verdeck die seitlichen Dachpfosten oder Führungslenker stehen. Dementsprechend müssen bei geschlossenem Verdeck die Seitenteile aus ihrer Abdecklage entfernt sein, während für das Mittelteil, bezogen auf Schließlage und Öffnungslage des Verdeckes, nur eine Längsverlagerung erforderlich ist, da bei geöffnetem Verdeck der Verdeckkasten voll überdeckt sein soll, bei geschlossenem Verdeck dieses aber im rückwärtigen Bereich des Verdeckkastens aus diesem herausgeführt ist, so dass das Mittelteil gegenüber seiner Lage bei geöffnetem Verdeck etwas nach vorne versetzt sein muß. Bezogen auf den Öffnungs- und Schließvorgang des Klappverdeckes ergeben sich somit eine Reihe notwendiger Verstellbewegungen für das Verdeck einerseits und die Abdeckung andererseits und für letztere, bei vom Mittelteil getrennten Seitenteilen sowohl für das Mittelteil und die Seitenteile.

Hierzu sieht die vorstehend angesprochene Lösung vor, die Seitenteile in ihrem vorderen, bezogen auf die Fahrzeugquerrichtung inneren Bereich um eine karosseriefeste, aufrechte Achse schwenkbar anzulenken und derart mit dem Mittelteil zu koppeln, dass bei Längsversatz des Mittelteiles aus seiner der Öffnungsstellung des Verdeckes entsprechenden rückwärtigen Abdecklage in seine vordere, der Schließlage des Verdeckes entsprechenden Lage die Seitenklappen etwa ebenenparallel zum Mittelteil unter das Mittelteil eingeschwenkt werden, so dass seitlich des Mittelteiles, wie auch hinter diesem die zur Durchführung des Verdeckes in dessen Schließlage erforderlichen Freiräume gegeben sind. Für das Verdeck einerseits und die Abdeckung andererseits sind getrennte Antriebe vorgesehen, lediglich der Antrieb der Abdeckungsteile untereinander ist zwangsgekoppelt.

Eine weitere bekannte Ausgestaltung (DE 197 49 552 A1) für die Abdeckung eines in einem heckseitigen Aufnahmeraum des Fahrzeuges abgelegten Klappverdeckes sieht vor, die Seitenteile am Mittelteil anzulenken, und zwar bei zu den in Fahrtrichtung sich erstreckenden Seitenkanten des Mittelteiles etwa paralleler Lage der Schwenkachsen, so dass Mittelteil und Seitenteile in der die Verdeckaufnahme freigebenden Lage der Abdeckung haubenartig zueinander angestellt an die inneren Kanten des Verdeckkastens anschließen. Der Antrieb für die Verschwenkung der Seitenteile erfolgt in Abhängigkeit von der Verlagerung des Mittelteiles automatisch und gemeinsam, unter Zwischenschaltung eines teleskopierbaren Elementes als Steuerelement.

Desweiteren ist aus der DE 197 12 967 A1 eine aus Mittelteil und Seitenteilen bestehende Abdeckung für den Aufnahmeraum von Klappverdecken von Fahrzeugen bekannt, bei der dem Klappverdeck und den Teilen der Abdeckung, d.h. dem Mittelteil und den Seitenteilen getrennte Antriebe zugeordnet sind, bei Anlenkung der Seitenteile am Mittelteil über eine Gelenkverbindung mit zum Mittelteil aufrechter Schwenkachse derart, dass die Seitenteile unter das Mittelteil eingeschwenkt werden können.

Bekannt ist ferner aus der DE 298 04 385 U1, und der dieser entsprechenden DE 198 10 616 A1 eine mehrteilige Abdeckung, deren Mittelteil über eine Trapezlenkeranordnung zwischen einer den Aufnahmeraum abdeckenden Schließlage und einer den Zugang zum Aufnahmeraum freigebenden Öffnungslage um eine in Fahrzeugquerrichtung verlaufende Momentanachse verschwenkbar ist und bei der die Seitenteile jeweils über eine in Fahrzeuglängsrichtung verlaufende Achse aus ihrer Seitenlage zum Mittelteil in eine aufrechte Lage nach unten verschwenkbar sind, wobei die Schwenkachsen der Seitenteile um eine zum Mittelteil lagefeste Querachse gegenüber dem Mittelteil in Hochrichtung verschwenkbar sind. Durch eine solche Ausgestaltung soll sich eine Verdeckkastenabdeckung ergeben, die klein bauend und besonders günstig herstell- und montierbar ist.

Über die US-PS'N 4 687 247 und 4 799 721 sowie die EP 0 302 963 B1 ist ferner eine mehrteilige Abdeckung für den Aufnahmeraum des Verdeckes bekanntgeworden, bei der das Mittelteil der Abdeckung durch den abgewinkelten Schenkel einer gegen den Fahrzeuginnenraum verschwenkbaren Rückwand desselben gebildet ist und bei der die Seitenteile bei karosserieseitiger Lagerung um aufrechte Achsen in der Schließlage der Abdeckung seitlich an das Mittelteil anschließen. Zum Öffnen der Abdeckung wird das Mittelteil durch Verschwenken der Rückwand angehoben, wobei die Seitenteile über rückwandseitig angebrachte Anlenkungen nach innen unter das Mittelteil eingeschwenkt werden.

Schließlich ist aus der DE 297 21 430 U1 eine mehrteilige Abdeckung für den Aufnahmeraum eines Verdeckes im Heck eines Fahrzeuges bekannt, die ein Mittelteil, und in der Schließlage der Abdeckung bei abgelegtem Verdeck, in Fahrzeugquerrichtung anschließende Seitenteile aufweist, wobei die Seitenteile dem Verdeck zugeordnet sind und im Bereich der vorderen, an den Frontspriegel anschließenden Verdeckrahmenteile um in deren Längsrichtung, also in Fahrtrichtung sich erstreckende Achsen schwenkbar sind, derart, dass sie bei geschlossenem Verdeck unter das Verdeck eingeschlagen sind und bei geöffnetem, in den Aufnahmeraum abgelegtem Verdeck seitlich anschließend zum Mittelteil liegen. Die Seitenteile sind somit zum Verdeckrahmen zwangsgekoppelt und mit diesem beweglich, wobei die Verstellbewegung der Seitenteile zwischen ihrer dem geschlossenen Verdeck zugeordneten, unter das Verdeck eingeschwenkten Lage und ihrer bei abgelegtem Verdeck ausgeschwenkten, seitlich an das Mittelteil anschließenden Lage jeweils in Abhängigkeit vom Bewegungszustand des Verdeckes gesteuert ist.

Weitere mehrteilige Abdeckungen für den Aufnahmeraum des jeweiligen Verdeckes im Heck eines Fahrzeuges bei geöffnetem Verdeck sind beispielsweise aus der US 2 599 277, der US 2 959 447 oder der US 2 992 042 bekannt.

Der Erfindung liegt die Aufgabe zugrunde, eine mehrteilige Abdeckung der eingangs genannten Art in ihrer Zuordnung zum Antrieb für das Verdeck dahingehend weiterzubilden, dass ein vollautomatisierter Ablauf für die Betätigung des Verdeckes und der Mittelteil und Seitenteile umfassenden Abdeckung ohne komplizierte Steuerungen mechanisch realisiert wird.

Gemäß der Erfindung wird dies durch die Merkmale des Anspruches 1 erreicht, wobei die vom Mittelteil der Abdeckung schwenkbar getragenen Seitenteile ebenso wie das Mittelteil selbst über einen für Verdeck und Abdeckung gemeinsamen Antrieb verlagerbar sind und die Verschiebebewegung für das Mittelteil in eine Schwenkbewegung für die Seitenteile umgesetzt wird, wenn das Mittelteil in seine rückwärtige, das im Aufnahmeraum abgelegte Verdeck überdeckende Endlage verschoben wird.

Die Steuerung für Verdeck und aus Mittelteil und gegenüber diesem verschwenkbaren Seitenteilen bestehender Abdeckung erfolgt durch mechanische Zwangskopplung, so dass die Bewegungsabläufe vorgegeben sind und keine zusätzlichen Steuereingriffe nötig sind.

Die Freigabe des Antriebs für die Längsverschiebung des Mittelteiles, von der die Stellbewegung für die Seitenteile abgeleitet wird, erfolgt bei der erfindungsgemäßen Lösung nach Einbringen des Verdecks in die Verdeckaufnahme.

Ein mechanisch einfacher Aufbau für eine Führung des Verdecks und die zugehörige Abdeckung sieht im Rahmen der Erfindung für das Mittelteil der Abdeckung eine Schwenkbeweglichkeit zwischen einer mehr horizontalen Abdecklage und einer gegenüber dieser um etwa 90° verschwenkten Öffnungslage vor, sowie eine Schwenkbeweglichkeit im Sinne einer Längsverlagerung des Mittelteiles bei im wesentlichen horizontaler Erstreckung, was dadurch erreicht wird, dass das Mittelteil gegenüber der Verdeckführung um wechselnde Schwenkachsen verschwenkbar ist, die zur Erstreckungsebene des Mittelteiles zur gleichen Seite versetzt und unterschiedlich beabstandet sind und von denen die zum Mittelteil ferner liegende Schwenkachse bei abgelegtem Verdeck eine lagefeste Schwenkachse bildet, um die das Mittelteil unter Längsverschiebung in seine rückwärtige Überdeckungslage zum abgelegten Verdeck versetzbar ist.

Für die Anbindung des Gelenkes am Mittelteil, das das Kernstück der Abdeckung bildet und auch die Funktion einer Hutablage wahrnimmt, ist eine Ausgestaltung zweckmäßig, bei der die eine Gelenkhälfte am Mittelteil lagefest angeordnet ist und bei der über die andere Gelenkhälfte die Antriebsverbindung der Seitenteile zum Verdeck läuft. Hierdurch läßt sich eine einfache Antriebsverbindung gestalten, bei der das jeweilige Seitenteil bei lagefestem Anschluß zum in der Ruhelage befindlichen Verdeck in Abhängigkeit von der Längsverstellung des Mittelteiles gegenüber diesem verschwenkbar ist.

Bei einer derartigen Ausgestaltung kann dem zum Mittelteil lagefesten Gelenkteil in einfacher Weise eine in Abhängigkeit vom Drehwinkel lagebestimmende Führung für das jeweilige Seitenteil zugeordnet sein. Durch diese Führung kann die Lage der Seitenteile zum Mittelteil in der Höhenlage quer zur Ebene des Mittelteiles und in der Winkellage der Ebene des Mittelteiles zur Ebene der Seitenteile in einfacher Weise bestimmt werden, wobei eine großflächige und stabile Abstützung bei flacher Bauweise mit Vorteil dadurch erreichbar ist, dass die Führung bezogen auf einen zum Mittelteil lagefesten Führungszapfen des Gelenkes radial einander gegenüberliegende Führungskulissen aufweist.

Diese Führungskulissen lassen sich zweckmäßigerweise einem den Führungszapfen lagefest umschließenden Führungszylinder zuordnen, so dass die Gelenkhälfte, über die die Antriebsverbindung läuft, bei kardanischer Führung auf dem Führungszapfen über in die Führungskulissen radial eingreifende, einander gegenüberliegende Führungsarme lagegesteuert verschwenkbar ist.

Weitere Einzelheiten und Merkmale der Erfindung ergeben sich aus den Patentansprüchen. Ferner wird die Erfindung nachstehend anhand eines Ausführungsbeispieles näher erläutert. Es zeigen:
- Fig. 1: in stark schematisierter Darstellung einen Ausschnitt eines Fahrzeuges mit einem abklappbaren Verdeck, dessen Verdeckführung nur in den Grundzügen gezeigt ist,
- Fig. 2: eine vereinfachte und schematisierte Seitenansicht einer Steuerung der Abdeckung für ein in einer Verdeckablage abzulegendes Verdeck, wobei von der aus einem Mittelteil und daran angeordneten Seitenteilen bestehenden Abdeckung nur das Mittelteil dargestellt ist, und zwar in Verbindung mit einer teilweise vereinfacht dargestellten Führung für ein als Hardtop ausgebildetes Verdeck gemäß Fig. 1 in einer Grundstellung, in der das Verdeck geschlossen ist,
- Fig. 3: eine Schnittdarstellung, vergrößert, schematisiert und im Hinblick auf die Verdeutlichung der funktionalen Zusammenhänge abgewandelt, entsprechend der Schnittlinie III-III in Fig. 2 durch die Steuerung der Abdeckung gemäß Fig. 2,
- Fig. 4: eine Übergangsphase, in der von der Abdeckung wieder nur das Mittelteil, das als Hutablage dient, und das Verdeck mit den zugeordneten Führungs- und Antriebselementen bei halbgeöffnetem Verdeck dargestellt sind,
- Fig. 5: eine weitere Übergangsstellung, im Anschluß an die Stellung gemäß Fig. 4 beim Öffnen des Verdeckes, wobei der angedeutete vordere Dachteil sich an dem geöffneten Verdeck vorbeibewegt,
- Fig. 6: eine weitere Übergangsstellung in der Steuerung der Abdeckung, wobei gemäß Fig. 2, wiederum nur die Führungs- und Antriebselemente gezeigt sind und wobei das Verdeck nunmehr seine Endlage im Verdeckkasten (Ablagestellung) des Fahrzeuges erreicht hat, so dass der Schließvorgang für die Abdeckung durchgeführt werden kann,
- Fig. 7: der Beginn des Schließvorganges für die Abdeckung gemäß Fig. 2 mit Überführung der Abdeckung, von der nur das Mittelteil dargestellt ist, in ihre zweite Schließstellung, wobei der Stellantrieb seine Bewegungsrichtung beibehält und die Steuerung der Abdeckung aus ihrer Verriegelung gegenüber der Steuerung des Verdeckes gelöst wird,
- Fig. 8: eine weitere Zwischenstellung im Schließvorgang der Abdeckung gemäß Fig. 2 bei abgelegtem Verdeck,
- Fig. 9: die Endstellung der Abdeckung - für das Mittelteil dargestellt - gemäß Fig. 2, in der die Abdeckung den Zugang zur Verdeckentnahme als Aufnahmeraum für das abgelegte Verdeck überdeckt,
- Fig. 10: bezogen auf eine der Fig. 2 entsprechende Stellung der Abdeckung eine isolierte Darstellung derselben, wobei die Abdeckung nunmehr mit ihren Seitenteilen und deren Steuerungs- und Betätigungselementen gezeigt ist, und zwar entsprechend der Stellung bei geschlossenem Verdeck mit unter das Mittelteil eingeschwenkten Seitenteilen,
- Fig. 11: eine weitere isolierte Darstellung der Abdeckung gemäß Fig. 10, nunmehr in einer maximalen Öffnungsstellung gemäß Fig. 6 bei in der Verdeckaufnahme abgelegtem Verdeck,
- Fig. 12: eine Rückansicht der Darstellung gemäß Fig. 11, in Richtung des Pfeiles XII in Fig. 11,
- Fig. 13: die Abdeckung in einer isolierten Darstellung nach Erreichen ihrer Schließlage bei in der Verdeckaufnahme abgelegtem Verdeck, analog zu Fig. 9,
- Fig. 14: eine Ansicht der Abdeckung gemäß Fig. 13 in Richtung des Pfeiles XIV, d.h. in Fahrtrichtung gesehen,
- Fig. 15: eine Ansicht der Abdeckung gemäß Fig. 13 von unten entsprechend dem Pfeil XV in Fig. 4,
- Fig. 16: eine beispielsweise Darstellung eines in der Anbindung eines Seitenteiles an dem Mittelteil der Abdeckung verwendeten Gelenkes, und
- Fig. 17: die dem in der Prinzipdarstellung in Fig. 16 schematisiert dargestellten Gelenk zugeordnete Gelenkführung bei in Abwicklung dargestellter Kulissensteuerung.

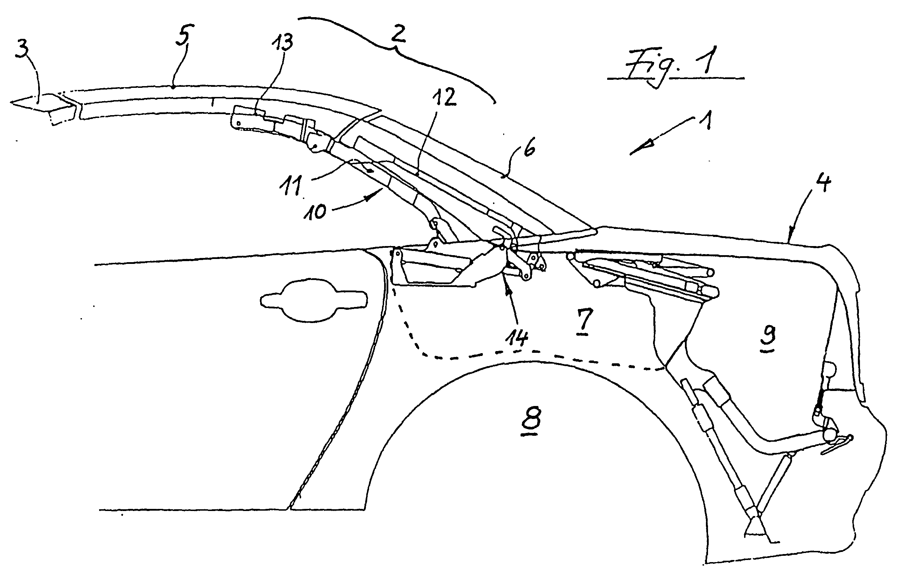

Fig. 1 zeigt in schematisierter Darstellung den rückwärtigen Teil eines Fahrzeuges 1, das ein zu öffnendes Verdeck 2 aufweist, welches sich zwischen dem hier angedeuteten Windschutzscheibenrahmen 3 und der heckseitig vorgesehenen Kofferraumabdeckung 4 erstreckt, wobei das Verdeck 2 durch ein sogenanntes Hardtop gebildet ist, welches einen an den Windschutzscheibenrahmen 3 anschließenden Dachteil 5 sowie einen Rückfensterteil 6 umfaßt. Dachteil 5 und Rückfensterteil 6 des Verdeckes 2 sind zum Öffnen des Verdeckes 2 in einer Verdeckaufnahme 7 verstaubar, die sich im wesentlichen oberhalb des Radausschnittes 8 zwischen Fahrzeuginnenraum und Kofferraum 9 erstreckt, wobei ein Teil des Kofferraumes 9 durch den Verdeckaufnahme 7 in Anspruch genommen wird.

Die Führung von Dachteil 5 und Rückfensterteil 6 ist als Zwangsführung ausgebildet und durch ein Viergelenkgetriebe 10 gebildet, das im wesentlichen nur schematisiert dargestellt ist und das einen vorderen Führungslenker 11, einen rückwärtigen Führungslenker 12 sowie eine Koppel 13 umfaßt, wobei die Führungslenker 11, 12, von denen der Führungslenker 11 hier als zweiarmiger Lenker ausgebildet ist, um karosseriefeste Schwenkachsen verschwenkbar sind. Derartige Führungseinrichtungen sind, über Dachteil 5 und Rückfensterteil 6 verbunden, in symmetrischer Anordnung auf beiden Seiten des Fahrzeuges 1 vorgesehen und umfassen jeweils auch einen Stellantrieb 14, der durch einen Stellzylinder veranschaulicht ist.

Wird das Verdeck 2, das auch als Soft-Verdeck ausgebildet sein kann, in der Verdeckaufnahme 7 abgelegt, so bedingt der Bewegungsablauf des Viergelenkgetriebes 10, dass in der abgelegten Position der Rückfensterteil 6 auf dem Rücken liegt, also mit seiner bei geschlossenem Verdeck 2 dem Fahrzeuginnenraum zugewandten Innenseite nach oben, und vom Dachteil 5 in seiner Normalposition, also mit nach oben und außen liegender Dachhaut überdeckt ist.

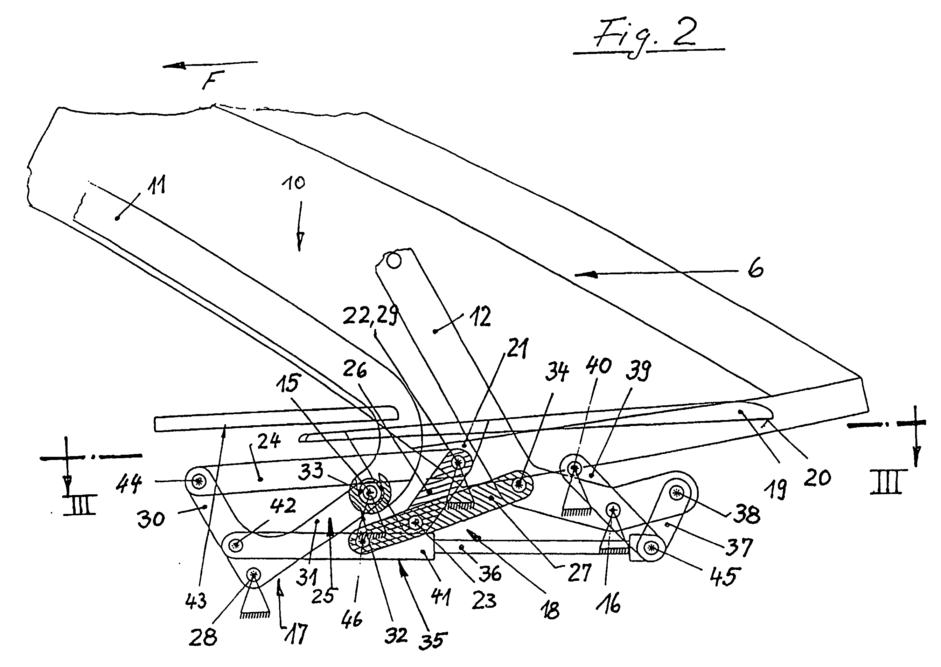

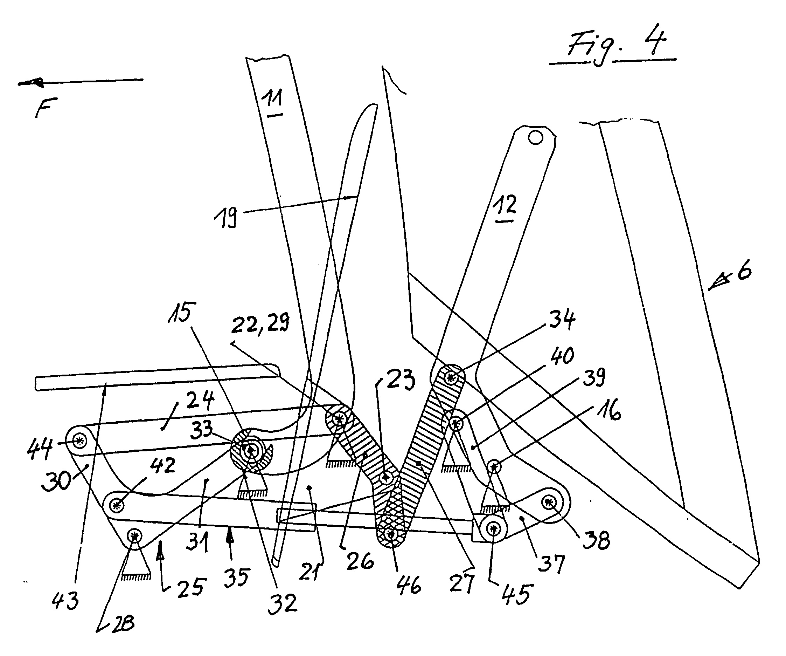

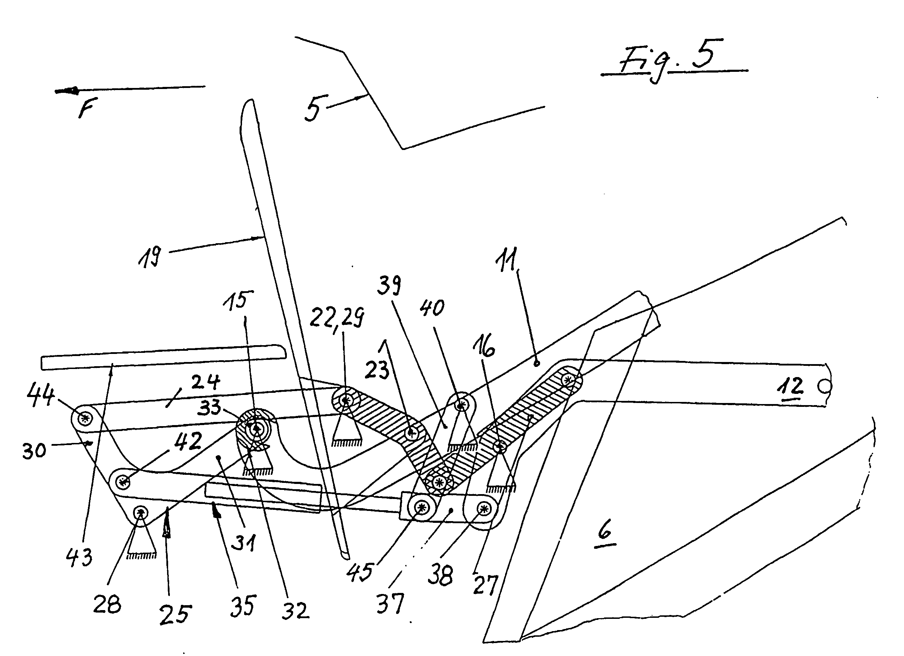

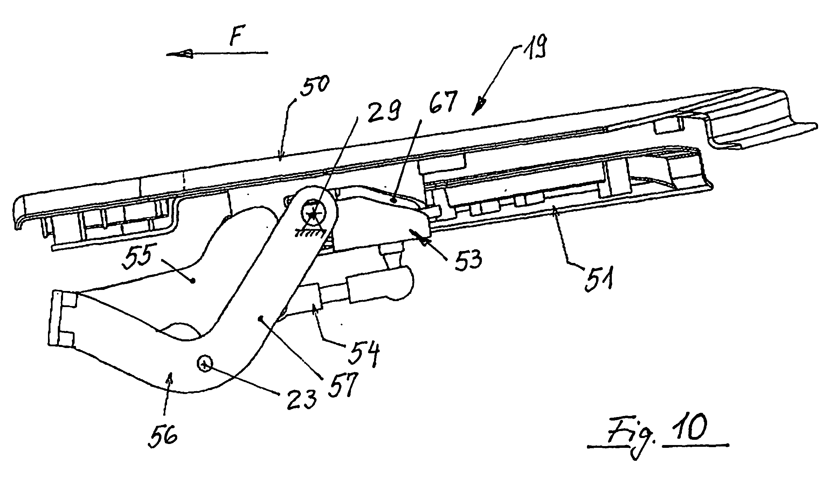

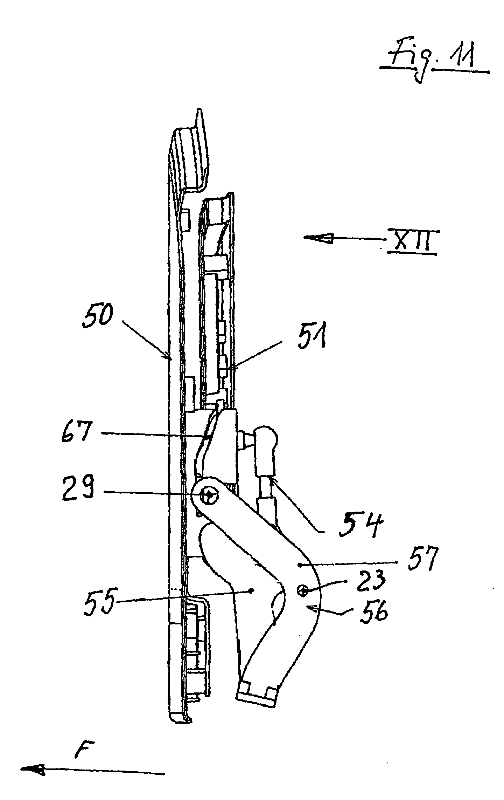

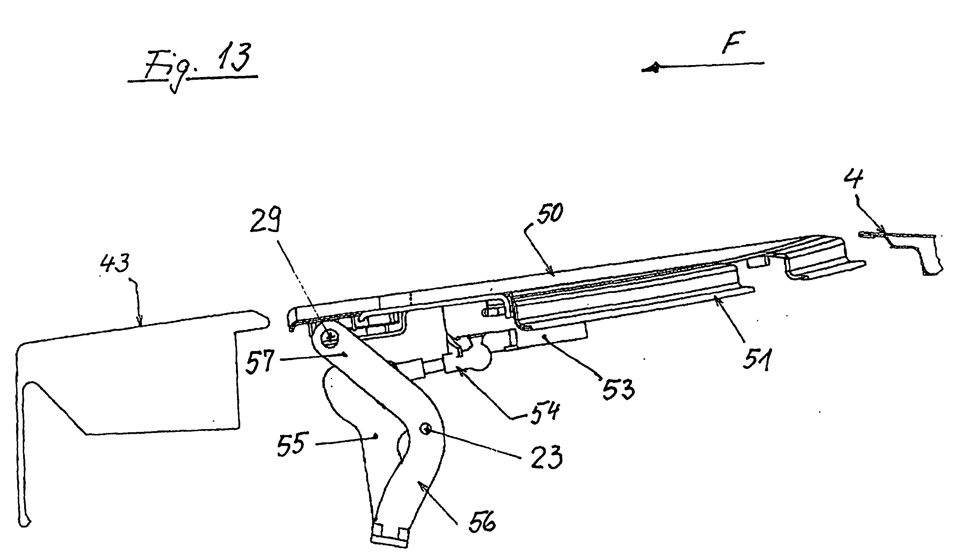

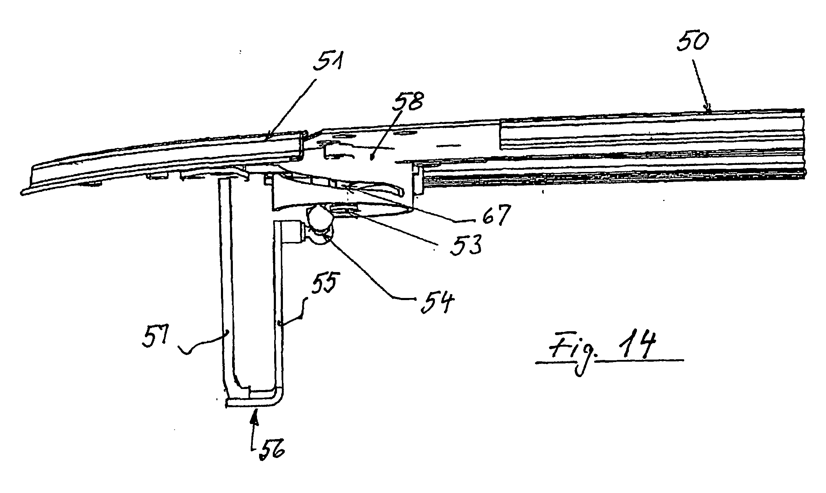

Das Ein- und Ausfahren des Verdeckes 2 in bzw. aus der Verdeckaufnahme 7 bedingt deren Öffnung nach oben, wobei die Verdeckaufnahme 7, im Gestaltungsbeispiel gemäß Fig. 1, teilweise durch die Kofferraumabdeckung 4 in deren geschlossenem Zustand überdeckt ist, und teilweise durch eine in Fig. 1 nicht dargestellte Abdeckung - in den Fig. 2 bis 9 mit 19 bezeichnet und nur bezüglich ihres Mittelteiles als Hutablage dargestellt -, wobei, bezogen auf das geschlossene Verdeck 2, dieses Mittelteil 50 den Freiraum zwischen der Innenraumrückwand und dem Rückfensterteil 6 zusammen mit seitlich daran anschließenden Seitenteilen 51 (siehe Fig. 10 bis 15) überdeckt. Bezogen auf eine Ausgestaltung gemäß Fig. 1 bedeutet dies, dass bei in der Verdeckaufnahme 7 abgelegtem Verdeck 2 zwischen der Abdeckung 19, bezogen auf deren vorbeschriebene Positionierung bei geschlossenem Verdeck 2, und der geschlossenen Kofferraumabdeckung 4 ein Spalt verbleibt, der zusätzlich überdeckt werden muß, wozu die Abdeckung 19 längsverschieblich ist. Diese Längsverschiebung erfolgt in Verbindung mit dem Öffnen und Schließen der Abdeckung 19, wie dies beim Versenken des Verdeckes 2 in die Verdeckaufnahme 7 und beim Ausfahren des Verdeckes 2 aus der Verdeckaufnahme 7 erforderlich ist. Weitere Einzelheiten und Merkmale der an sich bekannten Verdeckkonstruktion gemäß Fig. 1 ergeben sich aus der DE 44 45 580 C1.

Für die Erläuterung der Erfindung und das nähere Verständnis einer Steuerung der Abdeckung 19 in erfindungsgemäßer Weise dienen die Fig. 2 bis 15, wobei die Abdeckung 19 in Zwangskopplung zum Verdeck 2 angeordnet ist und bei Verschwenken des Verdeckes 2 entsprechend mitgeführt wird. Für Verdeck 2 und Abdeckung 19 ist ein gemeinsamer Antrieb vorgesehen, der unter Beibehalt seiner jeweiligen Vortriebsrichtung, die für den Öffnungs- und den Schließvorgang entgegengesetzt ist, jeweils den Öffnungs- bzw. Schließvorgang durchlaufend bewirkt.

In Fig. 2 sind von dem dem Verdeck 2 zugeordneten Viergelenkgetriebe 10 nur der vordere Führungslenker 11 und der rückwärtige Führungslenker 12 veranschaulicht. Vom weiteren Verdeck ist nur der Rückfensterteil 6 schematisch angedeutet.

Den Bestandteile des Viergelenkgetriebes 10 bildenden, symmetrisch für beide Fahrzeugseiten vorgesehenen vorderen Führungslenkern 11 und rückwärtigen Führungslenkern 12 sind, wie in der schematisierten Darstellung gemäß Fig. 2 erkennbar, jeweils karosseriefeste Schwenkachsen zugeordnet. Die Schwenkachse für den vorderen Führungslenker 11 ist mit 15 und die Schwenkachse für den rückwärtigen Führungslenker 12 mit 16 bezeichnet.

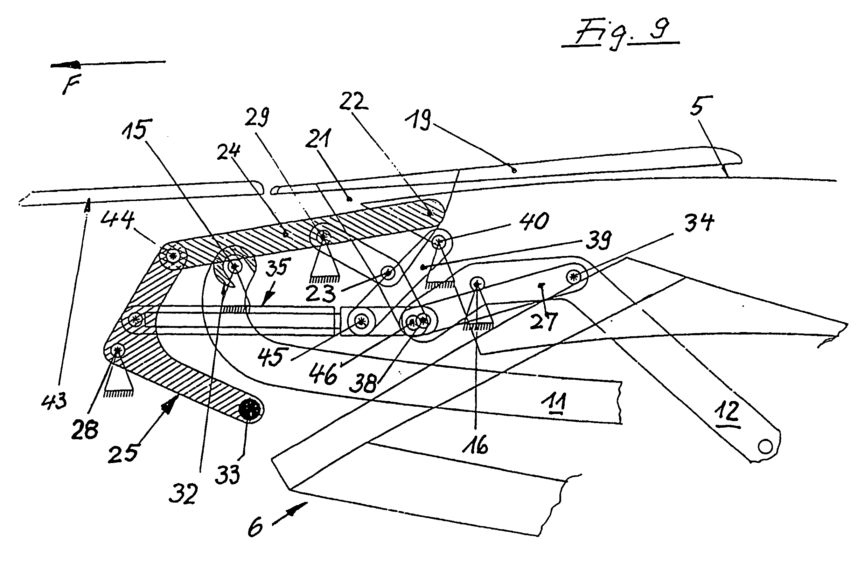

Gekoppelt mit den Führungslenkern 11 und 12 sind jeweils Führungsgestänge 17 und 18, die ihrerseits die Abdeckung 19 steuern, von der in Fig. 2 in ihrer bezogen auf das geschlossene Verdeck 2 abgestimmten vorderen, ersten Schließlage lediglich das Mittelteil 50 gezeigt ist, wobei vom Verdeck 2 in Fig. 2 nur der Rückfensterteil 6 gezeigt ist, der im geschlossenen Zustand des Verdeckes 2 mit seinen seitlichen Begrenzungen die C-Säule des Fahrzeuges bildet. Die entsprechende, zweite Schließlage der Abdeckung 19 ist in Fig. 9 veranschaulicht, wobei der Vergleich der Fig. 2 und 9 zeigt, dass die zweite Schließlage, die bei geöffnetem und in der Verdeckaufnahme 7 abgelegtem Verdeck 2 gegeben ist, eine nach hinten versetzte rückwärtige Schließlage ist, so dass die Abdeckung 19 in dieser zweiten Schließlage den Spaltbereich im Zugang zur Verdeckaufnahme 7 überdecken kann, der bei geschlossenem Verdeck 2 vom Rückfensterteil 6 abgedeckt und ausgefüllt ist.

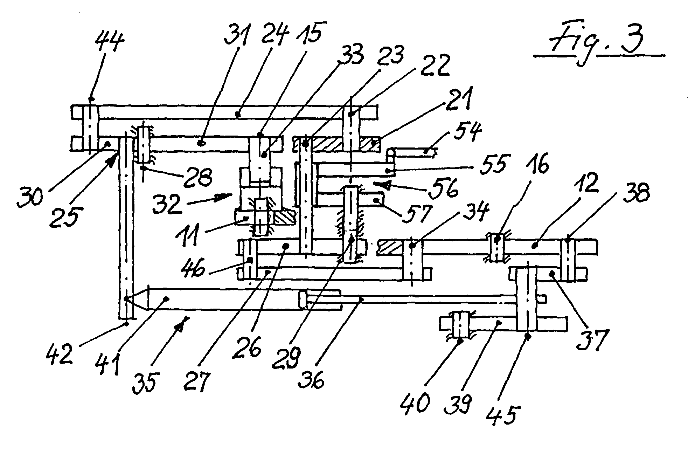

Nachfolgend wird, bezogen auf das Ausführungsbeispiel gemäß Fig. 2 bis 9, zunächst der grundsätzliche Aufbau der Führungsgestänge 17 und 18 in Zuordnung zur Abdeckung 19 beschrieben, wobei Antrieb, Anordnung und Steuerung der Seitenteile 51 nicht berücksichtigt ist, und Fig. 3 ergänzend veranschaulicht, wie die einzelnen Hebel und Lenker der Führungsgestänge 17 und 18 und des Viergelenkgetriebes 10 in Zuordnung zur Abdeckung 19 zu deren Antrieb und Führung zusammenwirken. Der Abdeckung 19 vorgelagert - im Übergang zum Fahrzeuginnenraum - ist eine Verkleidung 43, die von der Abdeckung 19 in ihrer ersten Schließlage (Fig. 2) teilweise untergriffen ist.

Das Mittelteil 50 der Abdeckung 19 ist an seiner Unterseite, d.h. seiner in den Schließlagen der Verdeckaufnahme 7 zugewandten Seite 20, den Führungsgestängen 17 und 18 zugeordnet, mit einer Konsole 21 versehen, die, in Höhenrichtung beabstandet, d.h. in verschiedenem Abstand zur Unterseite 20 des Mittelteiles 50, einen ersten Führungspunkt 22 und einen zweiten Führungspunkt 23 aufweist, wobei im ersten Führungspunkt 22 das vordere Führungsgestänge 17 und im zweiten Führungspunkt 23 das rückwärtige Führungsgestänge 18 mit der Konsole 21 verbunden ist. Die Führungsgestänge 17 und 18 sind jeweils durch ein Hebelpaar gebildet, wobei die Hebel des Führungsgestänges 17 mit 24 und 25 und die Hebel des Führungsgestänges 18 mit 26 und 27 bezeichnet sind. Von den Hebeln 25, 24; 26, 27 jedes Hebelpaares 17 und 18 ist jeweils einer karosseriefest angelenkt, nämlich für das Führungsgestänge 17 der Hebel 25 und für das Führungsgestänge 18 der Hebel 26. Die durch die karosseriefeste Anlenkung bestimmten Drehachsen sind mit 28 und 29 bezeichnet.

Von den Hebeln 24 und 25 ist der um die karosseriefeste Drehachse 28 schwenkbare Hebel 25 als Winkelhebel ausgebildet, dessen Arme 30 und 31 im Ausführungsbeispiel in entgegengesetzten Richtungen schräg nach oben verlaufen, wobei der bezogen auf die Fahrzeuglängsrichtung - die Vorwärtsfahrtrichtung ist in Fig. 2 mit F angedeutet - rückwärtige Hebelarm 31 in der Ausgangslage bei geschlossenem Verdeck gemäß Fig. 2 an seinem freien Ende über ein Fangmaul 32 des vorderen Führungslenkers 11 konzentrisch zu dessen Schwenkachse 15 gehalten ist. Das Fangmaul 32 nimmt einen seitlich vom Arm 31 abragenden Zapfen 33 (siehe Fig. 3) auf und ist nach oben offen, so dass der Arm 31 nicht nach unten ausschwenken kann. Am freien Ende des anderen Armes 30 des Hebels 25 ist der Hebel 24 über eine Schwenkachse 44 angelenkt. Der Hebel 24 erstreckt sich in der dargestellten Ausgangslage im wesentlichen parallel zur Ebene der Abdeckung 19 und ist den Arm 31 übergreifend im oberen, ersten Führungspunkt 22 mit der Konsole 21 der Hutablage 19 verbunden.

Dieser erste Führungspunkt 22 liegt in der Ausgangslage gemäß Fig. 2 koaxial zur karosseriefesten Drehachse 29 des Hebels 26 des Führungsgestänges 18, der in seinem längsmittleren Bereich im zweiten Führungspunkt 23 mit der Konsole 21 verbunden ist und an dessen anderem Ende der Hebel 27 im Punkt 46 angelenkt ist, der seinerseits in einem Drehpunkt 34 mit dem rückwärtigen Führungslenker 12 verbunden ist.

Der rückwärtige Führungslenker 12 ist über den Stellantrieb 35 beaufschlagt, der für das Verdeck 2 und die Abdeckung 19 gemeinsam wirksam ist und der durch einen Stellzylinder 41 gebildet ist. Der hydraulisch oder pneumatisch beaufschlagte Stellzylinder 41 des Stellantriebes 35 beaufschlagt über seine Kolbenstange 36 unter Vermittlung eines Viergelenkes den rückwärtigen Führungslenker 12, wobei die Anlenkung am Führungslenker 12 über eine Stützstrebe 37 erfolgt, die ihrerseits am über die Schwenkachse 16 hinausragenden Ende des rückwärtigen Führungslenkers 12 in Punkt 38 angelenkt ist und die koaxial zur Anlenkung 45 der Kolbenstange 36 über eine Haltestrebe 39 karosseriefest in einem Anlenkpunkt 40 drehbar abgestützt ist.

Gegenüberliegend ist der Stellantrieb 35 über den Zylinder 41 im Anlenkpunkt 42 am Arm 30 des Hebels 25 abgestützt, der seinerseits durch die Lagerung auf der karosseriefesten Drehachse 28 und die Abstützung im Fangmaul 32 lagefest gehalten ist, bis durch Zusammenfahren des Stellantriebes 35 - mit entsprechender Verschwenkung des rückwärtigen Führungslenkers 12 und des über diesen mitgenommenen vorderen Führungslenkers 11 in Richtung auf die Ablagestellung des Verdeckes 2 in der Verdeckaufnahme 7 - der vordere Führungslenker 11 eine Schwenklage erreicht, in der die Öffnung des Fangmaules 32 etwa tangential zu einem zur Drehachse 28 konzentrischen Bogen durch die Schwenkachse 15 liegt, derart, dass über die Zugkraftbeanspruchung des Stellantriebes 35 der Hebel 25 den Zapfen 33 aus dem Fangmaul 32 ausfädelt.

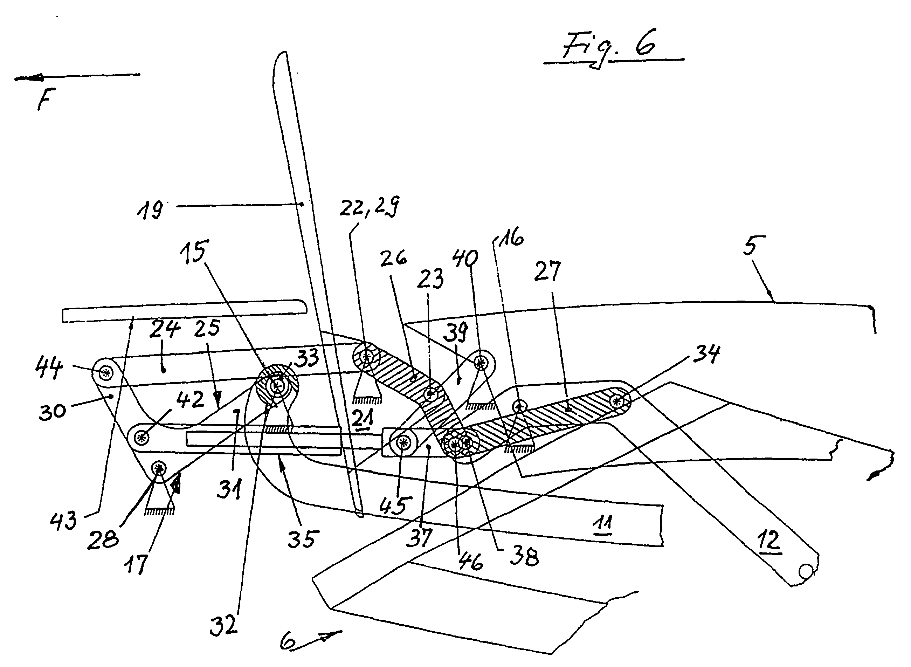

Dieser Ausfädelposition, die in Fig. 6 veranschaulicht ist, entspricht die Endstellung des Verdeckes 2 in der Verdeckaufnahme 7. In Richtung auf diese Endstellung wirken die Massekräfte des Verdeckes 2, sobald eine Grenzlage im Öffnungsweg des Verdeckes 2 überschritten ist, und es ist für das Verdeck 2 in seiner Ablagestellung (Endstellung) in der Verdeckaufnahme 7 erfindungsgemäß, wie im Ausführungsbeispiel dargestellt, eine Anschlagstellung gegeben, so dass das Verdeck 2 beim weiteren Verschwenken der Abdeckung 19 im Sinne des Schließens - Aufbringen einer Zugkraft über den Stellantrieb 35 - seine Lage beibehält und lediglich die Abdeckung 19 im Sinne einer Verlagerung in ihre zweite Schließstellung verlagert wird. Ist diese erreicht, so sind über den Stellantrieb 35 beide Verschwenkpartner - Abdeckung 19 und Verdeck 2 - in ihrer Endlage bei geöffnetem Verdeck 2 gehalten, wobei auch der Abdeckung 19 oder dem zugehörigen Führungsgestänge 17 ein diese Endlage bestimmender Anschlag zweckmäßigerweise zugeordnet sein kann, was hier nicht weiter dargestellt ist.

Bei dieser Lösung wird von dem Gedanken Gebrauch gemacht, dass die höhenversetzte Lage des ersten Führungspunktes 22 und des zweiten Führungspunktes 23 und eine wechselseitige Nutzung dieser Führungspunkte als Drehachsen Dreh- und Schwenkbewegungen der Abdeckung 19 ermöglicht, wobei durch Verschwenken des einen der Führungspunkte, hier des Führungspunktes 23 um den Führungspunkt 22 als Drehachse für den Führungspunkt 23 eine Ausgangslage als Drehachse geschaffen werden kann, die bei durch die Drehung um den ersten Führungspunkt 22 als Drehachse erreichter, translatorisch versetzter Lage für den zweiten Führungspunkt 23 und dessen Nutzung als Drehachse zu einer Längsverschiebung der Abdeckung 19 in Verbindung mit deren Verschwenken führt.

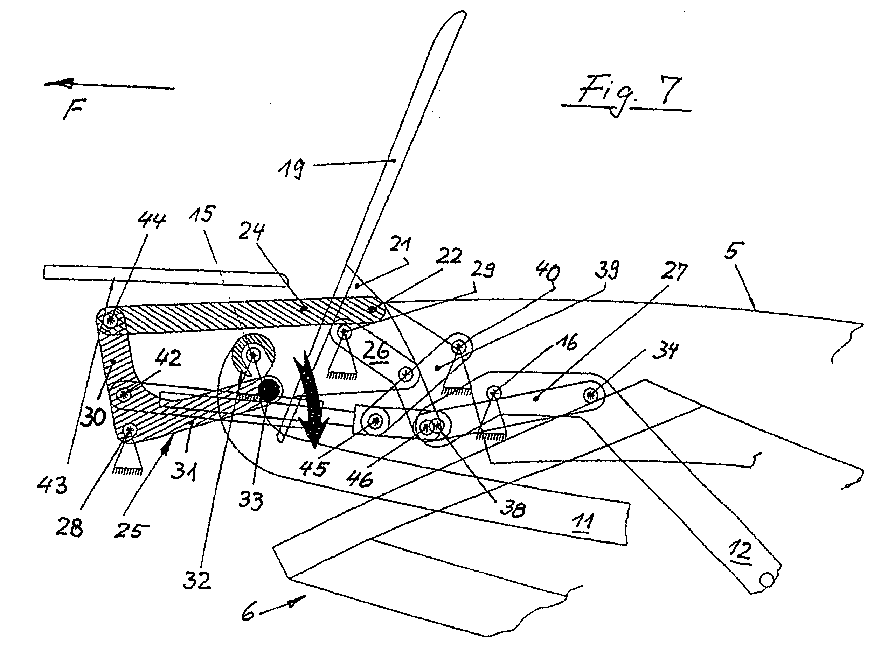

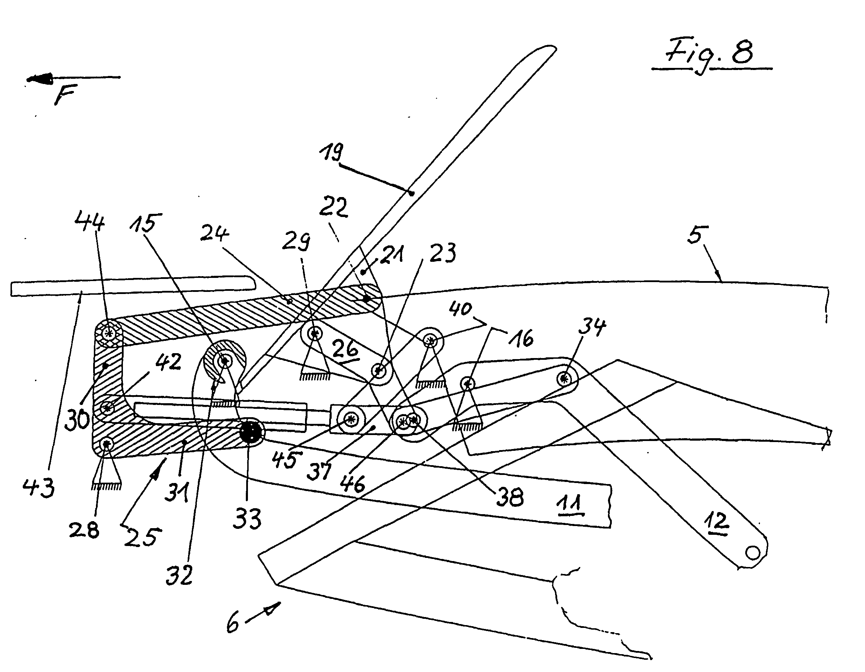

Den entsprechenden Ablauf veranschaulichen die Fig. 2 bis 9, wobei mit Fig. 9 die Endlage mit abgelegtem Verdeck 2 veranschaulicht ist. Wird aus dieser Endlage das Schließen des Verdeckes 2 eingeleitet, so ergibt sich ein gegenläufiger Ablauf, wobei durch Ausfahren des Stellantriebes 35 - bei Abstützung gegen die Massekraft des Verdeckes 2 - zunächst die Abdeckung 19 angehoben wird (Fig. 8), im Verlauf des weiteren Anhebens (Fig. 7) der Hebel 25 des Führungsgestänges 17 in Richtung auf das Fangmaul 32 des nach wie vor in der abgesenkten Ruhelage befindlichen vorderen Führungslenkers 11 verschwenkt wird (Fig. 7) und schließlich der Zapfen 33 in das Fangmaul 32 eingefädelt wird (Fig. 6). Damit ist, bei umgekehrtem Ablauf, wiederum die Ausgangsstellung des Führungsgestänges 17, nunmehr gemäß Fig. 6 bis 2 erreicht, in der über das Führungsgestänge 17 der erste Führungspunkt 22 als Drehachse fixiert ist, um den der zweite Führungspunkt 23 über den Hebel 26 des Führungsgestänges 18 geschwenkt wird, womit beim weiteren Ausfahren des Stellantriebes 35 das Verdeck 2 aus der Verdeckaufnahme 7 angehoben und in Schließrichtung verschwenkt wird. Hierbei eilt die Schließbewegung des Verdeckes 2 der Schließbewegung der Abdeckung 19 bezogen auf deren Überführung in die erste Schließlage (Fig. 2) voraus.

Wie die Zeichnungen veranschaulichen wird mit der Erfindung eine Lösung angeboten, die mit konstruktiv einfachen Mitteln einen flach und schlank bauenden Antriebsverbund für Verdeck 2 und Abdeckung 19 ermöglicht, wobei der Stellantrieb 35 unmittelbar zwischen Elementen der Verdeck- bzw. Abdeckungssteuerung wirksam ist, so dass von der Karosserie in Verbindung mit der Verstellung von Verdeck 2 und Abdeckung 19 nur geringe Kräfte aufzunehmen sind.

Im Hinblick auf die Erfindung erweisen sich dabei Maßverhältnisse für die Führungsgestänge 17 und 18 sowie deren Anlenkungen zur Abdeckung 19 als zweckmäßig, wie sie den Zeichnungen zu entnehmen sind, weshalb diese Maßverhältnisse eine besonders zweckmäßige Ausgestaltung bedeuten.

Besonders vorteilhaft macht sich auch bemerkbar, dass die Stellrichtung des Stellantriebes 35 für den gesamten Verstellvorgang sowohl beim Öffnen wie auch beim Schließen des Verdeckes 2 jeweils die gleiche ist, und zwar bei integrierter Steuerung für die Abdeckung 19, wobei die Stellkräfte für das Öffnen oder Schließen des Verdeckes 2 nicht über die Steuerung für die Abdeckung 19 aufgenommen werden müssen, obwohl der Stellantrieb 35 an einem Element dieser Steuerung unmittelbar angreift, nämlich dem Hebel 25 des Führungsgestänges 17.

In den voraufgehenden Darstellungen gemäß Fig. 2 und 4 bis 9 ist die Abdeckung 19 jeweils als eine Einheit dargestellt, entsprechend Ausgestaltungen bei Fahrzeugen mit einer einteiligen, als Hutablage eingesetzten Abdeckung. In den nachstehenden Figuren ist eine mehrteilige Ausgestaltung der Abdeckung veranschaulicht, und es besteht die Abdeckung jeweils aus einem Mittelteil 50 und Seitenteilen 51, wobei die Seitenteile 51 beiderseits des Mittelteils 50 vorgesehen sind und bei in der Verdeckaufnahme 7 abgelegtem Verdeck 2 und geschlossener Abdeckung 19 den Bereich überdecken, in dem bei geschlossenem Verdeck 2 die dem C-Säulenbereich des Verdeckes 2 entsprechenden Verdeck- und Gestängeteile verlaufen.

Insgesamt wird die Abdeckung 19 in ihrer mehrteiligen Ausführung gemäß Fig. 10ff in gleicher Weise betätigt wie anhand der voraufgegangenen Figuren für eine einteilige Abdeckung geschildert, zusätzlich ist aber eine Steuerung der Seitenteile 51 vorgesehen, wobei Antrieb und Steuerung für die Seitenteile 51 auf dem Antrieb des Mittelteiles 50 aufbaut und diesen ergänzt.

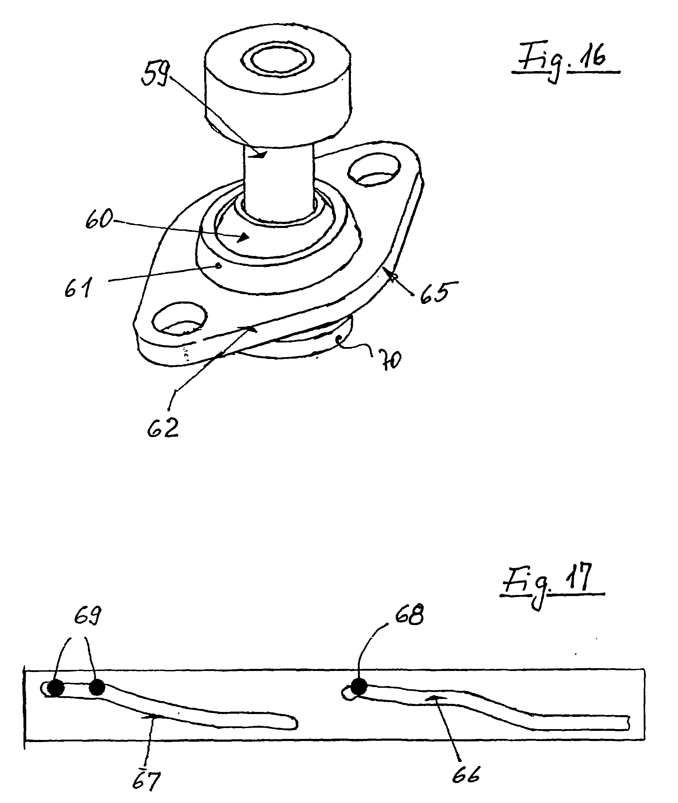

Anhand von Fig. 10 wird zunächst der grundsätzliche Aufbau veranschaulicht. Die Seitenteile 51 sind in dieser Darstellung unter das Mittelteil 50 eingeschwenkt, liegen mit geringem Abstand zu diesen etwa ebenenparallel zu diesem und sind am Mittelteil 50 über ein Gelenk 53 abgestützt. Dieses Gelenk 53 ist beispielsweise in Form des Taumelgelenkes in Fig. 16 ausgestaltet und mit einer Kulissensteuerung versehen, wobei über das Gelenk 53 der Antrieb für das jeweilige Seitenteil 51 verläuft, der an dem mit dem jeweiligen Seitenteil 51 verbundenen Gelenkteil 65 angreift.

Dieser Antrieb umfaßt einen Stützlenker 54, beispielsweise in Form einer Stützstange mit gelenkigen Anschlußpunkten. Der vom Gelenk 53 abgelegene Anschlußpunkt des Stützlenkers 54 ist an einem Hebelarm 55 angelenkt, der im Ausführungsbeispiel Bestandteil eines mehrarmigen Hebels 56 ist, welcher über seinen weiteren Arm 57 karosseriefest gelagert ist, und zwar im Bereich der Drehachse 29, bevorzugt koaxial zur Drehachse 29 des Hebels 26 des rückwärtigen Führungsgestänges 18, welches sich, bei Verlagerung des Verdeckes 2 aus der geschlossenen Verdecklage in die Ablagestellung in der Verdeckaufnahme 7, aus einer in Fahrtrichtung nach vorne erstreckenden, zusammengefalteten Lage (Fig. 2) in eine hintere, ausgefaltete Strecklage umstellt. Zusätzlich zu der karosseriefesten Anlenkung (Drehachse 29) ist der Hebelarm 57 im Bereich des zweiten Führungspunktes 23, bevorzugt koaxial zu diesem, mit der Konsole 21 bzw. dem Hebel 26 des rückwärtigen Führungsgestänges 18 verbunden, so dass der Hebel 56 bezogen auf das in der Verdeckaufnahme 7 abgelegte, und damit lagefeste Verdeck 2 eine lagefeste Stellung einnimmt.

Bezogen auf diese lagefeste, abgelegte Stellung des Verdeckes 2 verschwenkt die Abdeckung 19, wie Fig. 6 bis 9 veranschaulichen, nach Freigabe des Zapfens 33 durch das Fangmaul 32 um den Führungspunkt 23, so dass sich eine Verlagerung der Abdeckung 19, d.h. des Mittelteiles 50 und der Seitenteile 51 insgesamt ergibt, wobei aber durch die Anbindung der Seitenteile 51 über den Stützlenker 54 am Hebelarm 55 des Hebels 56 eine Schwenkbewegung der Seitenteile 51 gegenüber dem Mittelteil 50 erzwungen wird. Diese bewirkt bei Verschiebung des Mittelteiles 50 entgegen der Fahrtrichtung F, also in die voll geschlossene Abdecklage ein Ausschwenken der Seitenteile 51 in ihre seitliche Anschlußlage an das Mittelteil 50, da über den bei lagefest abgelegtem Verdeck aufgrund der geschilderten Anordnung lagefesten Hebel 56 die Längsverschiebung des Mittelteiles 50 entgegen der Fahrtrichtung über den Stützlenker 54 in eine entsprechende Drehbewegung für die das jeweilige Seitenteil 51 tragende Gelenkhälfte umgesetzt wird.

Beim Schließen des Verdeckes 2 läuft die Umstellung der Seitenteile 51 entsprechend ab. Die Verlagerung des Mittelteiles 50 in Fahrtrichtung, ausgehend von Fig. 9 in Richtung auf die geöffnete Stellung gemäß Fig. 6, führt zunächst zu einem Verschwenken der Seitenteile 51 unter das Mittelteil 50. Danach, d.h. nach Verriegelung des Zapfens 33 im Fangmaul 32, schwenkt der Hebel 56 synchron, oder bei nur leichten Achsabweichungen nahezu synchron zum Mittelteil 50, da der Hebel 56 mit seinen Hebelarmen 55 und 57 nun lagefest zur Konsole 21 angeordnet ist. Seitenteile 51 und Mittelteil 50 als Abdeckung 19 werden also gemeinsam, ohne wechselseitige Änderung ihrer Stellung zueinander in die vordere, in Fig. 2 veranschaulichte Abdecklage verlagert, in der die Seitenteile 51 unter das Mittelteil 50 eingeschwenkt sind.

In Fig. 16 ist schematisiert der Kern des Gelenkes 53 dargestellt, dem lagefest ein Führungszylinder 58 zugeordnet ist, der, ebenso wie das Gelenk 53 über seinen Führungszapfen 59, am Mittelteil 50 befestigt ist und der koaxial zum Führungszapfen 59 des Gelenkes 53 liegt. Der Führungszapfen 59 bildet die Führung für eine Gelenkkugel 60, die gegebenenfalls längsverschieblich auf dem Führungszapfen 59 geführt ist und die in einer Kugelaufnahme 61 gehalten ist, die, beispielsweise über einen Befestigungsflansch 62 mit dem jeweiligen Seitenteil 51 verbunden ist. An diesem mit dem Seitenteil 51 verbundenen Gelenkteil, oder auch unabhängig hiervon unmittelbar an dem Seitenteil 51 schließt der Stützlenker 54 bevorzugt über eine kardanische Verbindung an, wobei der Stützlenker 54 in seiner Erstreckung bevorzugt in Fahrzeuglängsrichtung, entsprechend der Verschieberichtung der Abdeckung 19, verläuft.

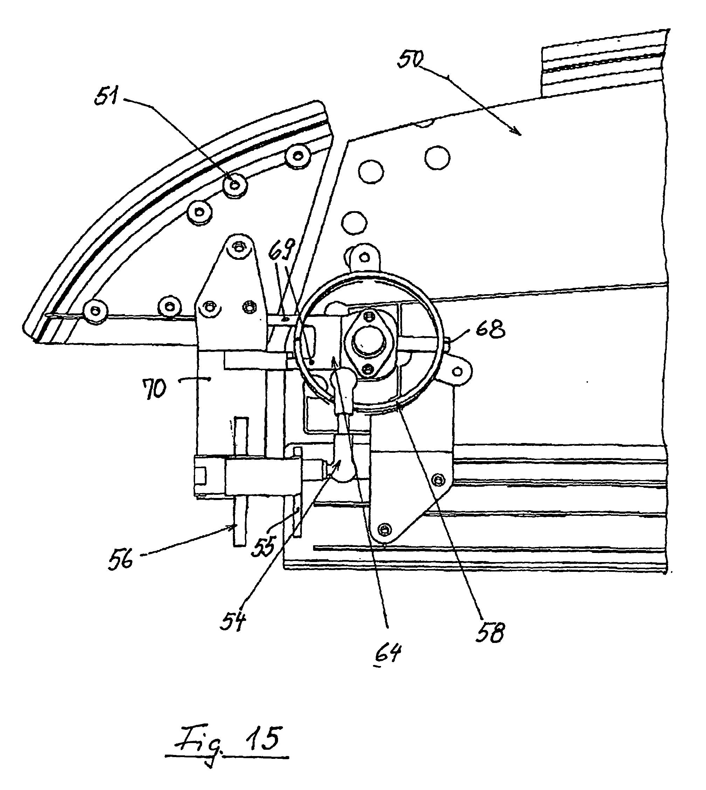

Die Verbindung des jeweiligen Seitenteiles 51 mit dem Gelenk 53 erfolgt - wie beispielsweise in Fig. 15 gezeigt - bevorzugt über einen Ausleger 64, der den Führungszylinder 58 durchsetzend mit dem auf dem Führungszapfen laufenden, dem Seitenteil 51 zugehörigen Gelenkteil verbunden ist, der insgesamt mit 65 bezeichnet ist und an dem bevorzugt auch der Stützlenker 54 angreift. Dem Ausleger 64 ist bei der erfindungsgemäßen Lösung im Führungszylinder 58 eine Kulissenführung zugeordnet, die bevorzugt durch zwei bezogen auf die Gelenkachse einander diametral gegenüberliegende Führungskulissen 66 und 67 gebildet ist, welche in Abwicklung in Fig. 17 veranschaulicht sind. In den Führungskulissen 66 und 67 ist der Ausleger 64 bevorzugt derartig abgestützt, dass in der einen Kulisse, Kulisse 67, lediglich eine translatorische Verschiebung, und in der anderen Kulisse, Kulisse 66, eine Verschiebung und Verdrehung des jeweils in die Kulisse eingreifenden Führungsarmes 68, 69 möglich ist. Hierzu ist der eine Führungsarm bevorzugt durch einen Führungsfinger 68 (Kulisse 66) zylindrischen Querschnittes gebildet, während der andere Führungsarm durch zwei in Umfangsrichtung gegeneinander versetzte Führungsfinger 69 (Kulisse 67) gebildet ist, wobei die Führungsfinger 68, 69 zueinander bevorzugt derart liegen, dass die Führungsfinger 69 des gegabelten, lediglich eine Verschiebung zulassenden Führungsarmes symmetrisch zu einer den gegenüberliegenden Führungsfinger 68 enthaltenen Ebene liegen.

Diese Ausgestaltung der Führung macht eine Steuerung des jeweiligen Seitenteiles 51 in seiner Höhen- und Ebenenlage zum Mittelteil 50 in Abhängigkeit vom jeweiligen Schwenkwinkel möglich, wobei das verwendete Taumelgelenk 53 in Verbindung mit entsprechender Gestaltung der Kulissen 66, 67 aufgrund der gegebenen drei rotatorischen Freiheitsgrade bereits die Möglichkeit gibt, einen Anschluß zwischen Mittelteil 50 und Seitenteilen 51 in der ausgeklappten Lage der Seitenteile 51 zu verwirklichen, ohne dass übergroße Spalte zwischen Seitenteilen 51 und Mittelteil 50 erforderlich sind. Besonders kleine Spalte lassen sich erzielen, wenn zusätzlich eine Längsverschieblichkeit entlang des Führungszapfens 59 gegeben ist, so dass in Verbindung mit entsprechender Gestaltung der Kulissen eine berührungsfreie Verschwenkung zwischen Seitenteilen 51 und Mittelteil 50 auch bei engen Spaltmaßen und zumindest im wesentlichen ebenengeschlossener Erstreckung von Seitenteilen 51 und Mittelteil 50 bei ausgeklappten Seitenteilen 51 möglich ist. Zweckmäßig hierfür ist erfindungsgemäß eine axial elastische, insbesondere federnde Abstützung des dem Seitenteil 51 zugeordneten Gelenkteiles 65 auf die der ausgeklappten Lage des Seitenteiles entsprechende Endstellung des Gelenkes 53, im Ausführungsbeispiel auf die obere Anschlagstellung, wofür es sich als zweckmäßig erweist, zwischen einem unteren Anschlagbund 71 des Führungszapfens 59 und dem Gelenkteil 65, insbesondere der Kugelaufnahme 61 eine Feder anzuordnen.

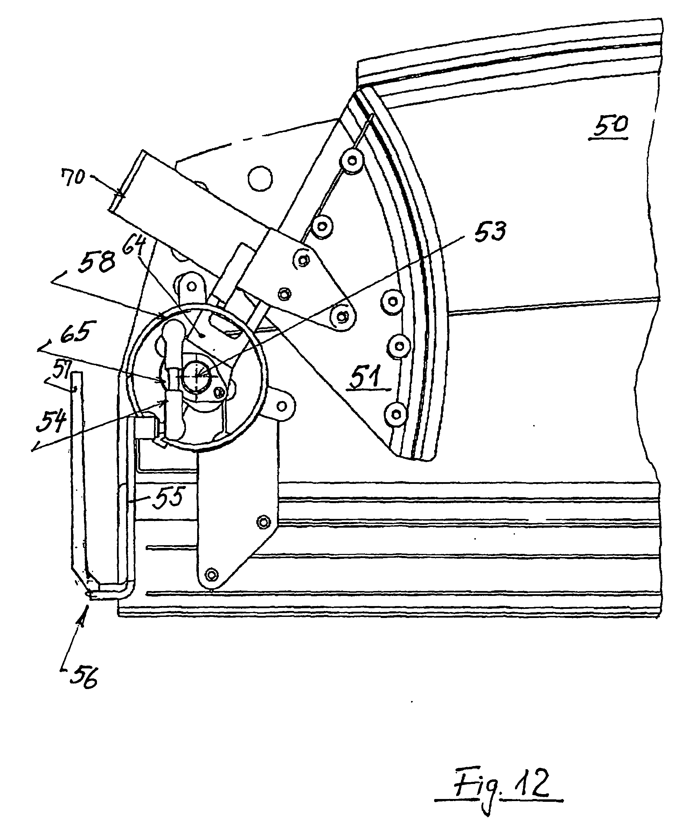

Die Ansichten gemäß Fig. 12 und 15 veranschaulichen, dass die Seitenteile 51 bei im wesentlichen dreiecksförmiger Kontur im Ausführungsbeispiel im bezogen auf die Fahrtrichtung hinteren Bereich seitlich an das Mittelteil 50 anschließen. Die Figuren zeigen aber auch, dass die Seitenteile 51 in Fahrtrichtung nach vorne benachbart zum Mittelteil 50 verlaufend mit Auslegern 70 versehen sein können, die lediglich Tragfunktion haben, oder auch im Hinblick auf entsprechende zusätzliche Abdeckfunktion ausgebildet sind. Im Ausführungsbeispiel sind die Ausleger 70 derart gestaltet, dass sie bei ausgeklappten Seitenteilen 51 in Überdeckung zum Hebel 56 liegen, derart, dass der Hebel 56 als zusätzliche Abstützung für die ausgeklappten Seitenteile und/oder als den Schwenkweg begrenzender Anschlag genutzt werden kann.

Die zum Verständnis der Erfindung beigefügte Fig. 3 dient nicht dem Zweck, die lagekorrekte Zuordnung der einzelnen Lenker und Hebel der Führungen für Verdeck und Hutablage entsprechend den Fig. 2 und 4 bis 9 zu veranschaulichen, sondern deren funktionales Zusammenwirken. Dementsprechend sind die in dieser Figur dargestellten Größenverhältnisse keineswegs maßstäblich, ebensowenig wie die Lage der Teile zueinander der tatsächlichen, konstruktiven Lage entspricht.

## Patentansprüche

1. Mehrteilige Abdeckung für den Aufnahmeraum eines Verdeckes (2) im Heck eines Fahrzeuges, die ein Mittelteil (50) und, in der Schließlage der Abdeckung (19), in Fahrzeugquerrichtung anschließende Seitenteile (51) sowie für das Mittelteil (50) in der Öffnungs- und Schließlage des Verdeckes (2) in Fahrzeuglängsrichtung versetzte Endlagen aufweist und bei der für die Seitenteile (51) und das Mittelteil (50) ein gemeinsamer, in Abhängigkeit von der Verdecklage gesteuerter Antrieb vorgesehen ist und die Seitenteile (51) zwangsgekoppelt an die Längsverlagerung des Mittelteiles (50) in Richtung auf dessen dem geschlossenen Verdeck (2) entsprechende Endlage, etwa ebenenparallel unter das Mittelteil (50) einschwenkbar sind,
**dadurch gekennzeichnet,**
**dass** die Seitenteile (51) gelenkig am Mittelteil (50) gelagert sind und dass der Antrieb für Verdeck (2) und Abdeckung (19) als gemeinsamer Antrieb mit über das Verdeck (2) zur Abdeckung (19) laufender, zwangsgekoppelter Antriebsverbindung ausgebildet ist, die bei Erreichen der Ablagestellung für das Verdeck (2) die Koppelung zum Verdeck löst und den Antrieb für das Verschwenken der Seitenteile (51) gegenüber dem Mittelteil (50) mit der Längsverschiebung des Mittelteils (50) in Richtung auf seine das abgelegte Verdeck (2) überdeckende Endlage freigibt.

2. Mehrteilige Abdeckung nach Anspruch 1,
**dadurch gekennzeichnet,**
**dass** bei Freigabe des Antriebs für die Längsverschiebung des Mittelteiles (50) das Verdeck (2) in die Verdeckaufnahme (7) eingebracht ist und eine Ruhestellung einnimmt.

3. Mehrteilige Abdeckung nach Anspruch 1 oder 2,
**dadurch gekennzeichnet,**
**dass** das Mittelteil (50) der Abdeckung (19) gegenüber der Verdeckführung um wechselnde Schwenkachsen verschwenkbar ist, die zur Erstreckungsebene des Mittelteiles (50) zur gleichen Seite versetzt in unterschiedlichem Abstand liegen und von denen die zum Mittelteil ferner liegende bei abgelegtem Verdeck eine Festachse bildet, um die das Mittelteil (50) unter Längsverschiebung in seine Überdeckungslage zum abgelegten Verdeck schwenkt.

4. Mehrteilige Abdeckung nach einem der vorhergehenden Ansprüche,
**dadurch gekennzeichnet,**
**dass** bei zwischen Mittelteil (50) und jeweiligem Seitenteil (51) befindlichem, vom Mittelteil (50) getragenen Gelenk (53) dessen einer Gelenkteil am Mittelteil (50) lagefest angeordnet ist, bei Abstützung des anderen Gelenkteiles (65) gegen das in der Verdeckaufnahme (7) abgelegte Verdeck (2).

5. Mehrteilige Abdeckung nach Anspruch 4,
**dadurch gekennzeichnet,**
**dass** das jeweilige Seitenteil (51) in Abhängigkeit von der Längsverstellung des Mittelteiles (50) gegenüber diesem verschwenkbar ist.

6. Mehrteilige Abdeckung nach Anspruch 4 oder 5,
**dadurch gekennzeichnet,**
**dass** dem zum Mittelteil (50) lagefesten Gelenkteil eine in Abhängigkeit vom Drehwinkel lagebestimmende Führung für das jeweilige Seitenteil (51) zugeordnet ist.

7. Mehrteilige Abdeckung nach Anspruch 6,
**dadurch gekennzeichnet,**
**dass** die Führung die Lage des Seitenteils (51) zum Mittelteil (50) in der Winkellage zur Ebene des Mittelteiles (50) und in der Höhenlage quer hierzu bestimmt.

8. Mehrteilige Abdeckung nach Anspruch 6 oder 7,
**dadurch gekennzeichnet,**
**dass** die Führung für das jeweilige Seitenteil (51) bezogen auf einen zum Mittelteil (50) lagefesten Führungszapfen (59) des Gelenkes (3) radial einander gegenüberliegenden Führungskulissen (66, 67) zugeordnet ist.

9. Mehrteilige Abdeckung nach Anspruch 8,
**dadurch gekennzeichnet,**
**dass** die Führungskulissen (66, 67) einem den Führungszapfen (59) lagefest umschließenden Führungszylinder (58) zugeordnet sind.

10. Mehrteilige Abdeckung nach Anspruch 8 oder 9,
**dadurch gekennzeichnet,**
**dass** der gegen das Verdeck (2) abgestützte Gelenkteil (65) kardanisch auf dem Führungszapfen (59) gehalten ist.

11. Mehrteilige Abdeckung nach Anspruch 10,
**dadurch gekennzeichnet,**
**dass** der gegen das Verdeck (2) abgestützte Gelenkteil (59) längsverschieblich auf dem Führungszapfen (59) geführt ist.

12. Mehrteilige Abdeckung nach Anspruch 10 oder 11,
**dadurch gekennzeichnet,**
**dass** der gegen das Verdeck (2) abgestützte Gelenkteil (59) in die Führungskulissen (66, 67) eingreifende, einander gegenüberliegende Führungsarme (Finger 68, 69) aufweist.

13. Mehrteilige Abdeckung nach Anspruch 12,
**dadurch gekennzeichnet,**
**dass** von den Führungsarmen der eine drehbar und verschiebbar und der andere lediglich verschiebbar geführt ist.

14. Mehrteilige Abdeckung nach Anspruch 13,
**dadurch gekennzeichnet,**
**dass** der drehbar und verschiebbar geführte Führungsarm als zylindrischer Führungsfinger (68) ausgebildet ist.

15. Mehrteilige Abdeckung nach Anspruch 13 oder 14,
**dadurch gekennzeichnet,**
**dass** der drehbar und verschiebbar geführte Führungsarm (Finger 69) als Führungsgabel ausgebildet ist.

16. Mehrteilige Abdeckung nach Anspruch 15,
**dadurch gekennzeichnet,**
**dass** der als Führungsgabel ausgebildete Führungsarm zwei symmetrisch zu einer den anderen Führungsarm enthaltenden Diagonalebene des Gelenkes liegende Gabelarme aufweist.

17. Mehrteilige Abdeckung nach einem der vorhergehenden Ansprüche,
**dadurch gekennzeichnet,**
**dass** die Abstützung zum Verdeck (2) einen zum Verdeckgestänge in dessen lagefester Ablagestellung feststehenden Hebelarm (55) aufweist, der über eine Pendelstütze (Stützlenker 54) mit dem Gelenk verbunden ist.

18. Mehrteilige Abdeckung nach Anspruch 17,
**dadurch gekennzeichnet,**
**dass** der Hebelarm Bestandteil einer das Seitenteil in seiner ausgeschwenkten Stellung untergreifenden Abstützung ist.

19. Mehrteilige Abdeckung nach Anspruch 17 oder 18,
**dadurch gekennzeichnet,**
**dass** der Hebelarm Bestandteil einer Anschlagvorrichtung für das Seitenteil (51) in seiner ausgeschwenkten Stellung ist.

## Claims

1. Multipart covering for the accommodating space of a folding top (2) in the rear of a vehicle, the covering having a central part (50) and, in the closed position of the covering (19), side parts (51) which adjoin it in the transverse direction of the vehicle and end positions which are offset in the longitudinal direction of the vehicle for the central part (50) in the open and closed position of the folding top (2), and in which a common drive controlled as a function of the position of the folding top is provided for the side parts (51) and the central part (50), and the side parts (51), which are forcibly coupled to the longitudinal displacement of the central part (50) in the direction of its end position corresponding to the closed folding top (2), can be pivoted inwards approximately horizontally and parallel under the central part (50), **characterized in that** the side parts (51) are mounted in an articulated manner on the central part (50), and **in that** the drive for the folding top (2) and covering (19) is designed as a common drive having a forcibly coupled driving connection which runs over the folding top (2) to the covering (19) and, when the storage position for the folding top (2) is reached, releases the coupling to the folding top and frees the drive to pivot the side parts (51) with respect to the central part (50) with the longitudinal displacement of the central part (50) in the direction of its end position covering the stowed folding top (2).

2. Multipart covering according to Claim 1, **characterized in that**, when the drive is freed for the longitudinal displacement of the central part (50), the folding top (2) is placed into the folding-top holder (7) and takes up a rest position.

3. Multipart covering according to Claim 1 or 2, **characterized in that** the central part (50) of the covering (19) can be pivoted with respect to the folding-top guide about alternating pivot axes which are situated offset with respect to the plane of extent of the central part (50) to the same side at different distances and of which the one, which is situated further away from the central part when the folding top has been put away, forms a fixed axis about which the central part (50) pivots while being displaced longitudinally into its overlapping position with respect to the stowed folding top.

4. Multipart covering according to one of the preceding claims, **characterized in that**, in the case of a joint (53) which is situated between the central part (50) and respective side part (51) and is supported by the central part (50), its one joint part is arranged in a positionally fixed manner on the central part (50) with the other joint part (65) being supported against the folding top (2) which has been put away in the folding-top holder (7).

5. Multipart covering according to Claim 4, **characterized in that** the particular side part (51) can be pivoted with respect to the central part (50) as a function of the longitudinal adjustment thereof.

6. Multipart covering according to Claim 4 or 5, **characterized in that** the joint part which is fixed in position with respect to the central part (50) is assigned a guide for the respective side part (51), which guide determines the position as a function of the angle of rotation.

7. Multipart covering according to Claim 6, **characterized in that** the guide determines the position of the side part (51) with respect to the central part (50) in the angular position with respect to the plane of the central part (50) and in the vertical position transversely thereto.

8. Multipart covering according to Claim 6 or 7, **characterized in that** on the basis of a guide pin (59) of the joint (3) that is fixed in position with respect to the central part (50), the guide for the respective side part (51) is assigned to radially mutually opposite guide slots (66, 67).

9. Multipart covering according to Claim 8, **characterized in that** the guide slots (66, 67) are assigned to a guide cylinder (58) which surrounds the guide pin (59) in a positionally fixed manner.

10. Multipart covering according to Claim 8 or 9, **characterized in that** the joint part (65) which is supported against the folding top (2) is held cardanically on the guide pin (59).

11. Multipart covering according to Claim 10, **characterized in that** the joint part (59) which is supported against the folding top (2) is guided in a longitudinally displaceable manner on the guide pin (59).

12. Multipart covering according to Claim 10 or 11, **characterized in that** the joint part (59) which is supported against the folding top (2) has mutually opposite guide arms (fingers 68, 69) which engage in the guide slots (66, 67).

13. Multipart covering according to Claim 12, **characterized in that** one of the guide arms is guided in a rotatable and displaceable manner and the other of the guide arms is guided only in a displaceable manner.

14. Multipart covering according to Claim 13, **characterized in that** the guide arm which is guided in a rotatable and displaceable manner is designed as a cylindrical guide finger (68).

15. Multipart covering according to Claim 13 or 14, **characterized in that** the guide arm (finger 69) which is guided in a rotatable and displaceable manner is designed as a guide fork.

16. Multipart covering according to Claim 15, **characterized in that** the guide arm which is designed as a guide fork has two fork arms which are situated symmetrically with respect to a diagonal plane of the joint that contains the other guide arm.

17. Multipart covering according to one of the preceding claims, **characterized in that** the support for the folding top (2) has a lever arm (55) which is fixed with respect to the folding-top linkage in its positionally fixed storage position and is connected to the joint via a hinged support (supporting link 54).

18. Multipart covering according to Claim 17, **characterized in that** the lever arm is part of a support which engages below the side part in its pivoted-out position.

19. Multipart covering according to Claim 17 or 18, **characterized in that** the lever arm is part of a stop device for the side part (51) in its pivoted-out position.

## Revendications

1. Recouvrement en plusieurs parties pour l'espace de réception d'une capote (2) à l'arrière d'un véhicule, qui présente une partie centrale (50) et, dans la position de fermeture du recouvrement (19), des parties latérales (51) se raccordant dans la direction transversale du véhicule ainsi que des positions terminales décalées dans la direction longitudinale du véhicule pour la partie centrale (50) dans la position de fermeture et d'ouverture de la capote (2), et dans lequel on prévoit pour les parties latérales (51) et la partie centrale (50) un entraînement commun commandé en fonction de la position de la capote et les parties latérales (51), accouplées de force au décalage longitudinal de la partie centrale (50), peuvent pivoter vers l'intérieur dans la direction de sa position terminale correspondant à la capote (2) fermée, dans un plan approximativement parallèle sous la partie centrale (50),
**caractérisé en ce que**
les parties latérales (51) sont montées de manière articulée sur la partie centrale (50) et **en ce que** l'entraînement pour la capote (2) et le recouvrement (19) est réalisé sous forme d'entraînement commun avec une liaison d'entraînement accouplée de force passant par-dessus la capote (2) en direction du recouvrement (19), qui libère l'accouplement à la capote lorsque la position de rangement de la capote (2) est atteinte et qui libère l'entraînement pour le pivotement des parties latérales (51) vis-à-vis de la partie centrale (50) avec le déplacement longitudinal de la partie centrale (50) dans la direction de sa position terminale recouvrant la capote rangée (2).

2. Recouvrement en plusieurs parties selon la revendication 1,
**caractérisé en ce que**
lors de la libération de l'entraînement pour le déplacement longitudinal de la partie centrale (50), la capote (2) est introduite dans le logement de capote (7) et adopte une position de repos.

3. Recouvrement en plusieurs parties selon la revendication 1 ou 2,
**caractérisé en ce que**
la partie centrale (50) du recouvrement (19) peut pivoter par rapport au guidage de la capote autour d'axes de pivotement variables, qui se situent à une distance différente de façon décalée du même côté par rapport au plan d'étendue de la partie centrale (50) et dont celui le plus éloigné de la partie centrale lorsque la capote est rangée forme un axe fixe autour duquel la partie centrale (50) pivote vers la capote rangée avec déplacement longitudinal dans sa position de recouvrement.

4. Recouvrement en plusieurs parties selon l'une quelconque des revendications précédentes,
**caractérisé en ce que**
lorsque l'articulation (53) portée par la partie centrale (50) se trouve entre la partie centrale (50) et la partie latérale respective (51), l'une de ses parties d'articulation est disposée fixe en position sur la partie centrale (50), lorsque l'autre partie d'articulation (65) est supportée contre la capote (2)' rangée dans le logement de capote (7).

5. Recouvrement en plusieurs parties selon la revendication 4,
**caractérisé en ce que**
la partie latérale respective (51) peut pivoter par rapport à la partie centrale (50) en fonction du déplacement longitudinal de celle-ci.

6. Recouvrement en plusieurs parties selon la revendication 4 ou 5,
**caractérisé en ce que**
l'on associe à la partie d'articulation fixée en position par rapport à la partie centrale (50) un guidage déterminant la position en fonction de l'angle de rotation pour chaque partie latérale (51).

7. Recouvrement en plusieurs parties selon la revendication 6,
**caractérisé en ce que**
le guidage détermine la position de la partie latérale (51) par rapport à la partie centrale (50) dans la position angulaire par rapport au plan de la partie centrale (50) et dans la position en hauteur, transversalement à celle-ci.

8. Recouvrement en plusieurs parties selon la revendication 6 ou 7,
**caractérisé en ce que**
le guidage pour chaque partie latérale (51) par rapport à un tourillon de guidage (59) de l'articulation (3) fixé en position par rapport à la partie centrale (50) est associé à des coulisses de guidage radialement opposées (66, 67).

9. Recouvrement en plusieurs parties selon la revendication 8,
**caractérisé en ce que**
les coulisses de guidage (66, 67) sont associées à un cylindre de guidage (58) entourant de manière fixée en position le tourillon de guidage (59).

10. Recouvrement en plusieurs parties selon la revendication 8 ou 9,
**caractérisé en ce que**
la partie d'articulation (65) supportée contre la capote (2) est maintenue sur le tourillon de guidage (59) par suspension par cardan.

11. Recouvrement en plusieurs parties selon la revendication 10,
**caractérisé en ce que**
la partie d'articulation (59) supportée contre la capote (2) est guidée de manière à pouvoir coulisser en longueur sur le tourillon de guidage (59).

12. Recouvrement en plusieurs parties selon la revendication 10 ou 11,
**caractérisé en ce que**
la partie d'articulation (59) supportée contre la capote (2) présente des bras de guidage (doigts 68, 69) opposés venant en prise dans les coulisses de guidage (66, 67).

13. Recouvrement en plusieurs parties selon la revendication 12,
**caractérisé en ce que**
l'un des bras de guidage est guidé de manière rotative et coulissante et l'autre seulement de manière coulissante.

14. Recouvrement en plusieurs parties selon la revendication 13,
**caractérisé en ce que**
le bras de guidage guidé de manière rotative et coulissante est réalisé sous forme de doigt de guidage cylindrique (68).

15. Recouvrement en plusieurs parties selon la revendication 13 ou 14,
**caractérisé en ce que**
le bras de guidage guidé de manière rotative et coulissante (doigt 69) est réalisé sous forme de fourche de guidage.

16. Recouvrement en plusieurs parties selon la revendication 15,
**caractérisé en ce que**
le bras de guidage réalisé sous forme de fourche de guidage présente deux bras de fourche situés symétriquement par rapport à un plan diagonal de l'articulation contenant l'autre bras de guidage.

17. Recouvrement en plusieurs parties selon l'une quelconque des revendications précédentes,
**caractérisé en ce que**
le support pour la capote (2) présente un bras de levier (55) fixé dans sa position de rangement fixe en position par rapport à la tringlerie de la capote, qui est connecté par le biais d'un support pendulaire (bras de support 54) à l'articulation.

18. Recouvrement en plusieurs parties selon la revendication 17,
**caractérisé en ce que**
le bras de levier fait partie d'un support venant en prise par le dessous avec la partie latérale dans sa position pivotée vers l'extérieur.

19. Recouvrement en plusieurs parties selon la revendication 17 ou 18,
**caractérisé en ce que**
le bras de levier fait partie d'un dispositif de butée pour la partie latérale (51) dans sa position pivotée vers l'extérieur.
